# EUROPÄISCHE PATENTSCHRIFT

(11) **EP 3 421 659 B1**
(45) Veröffentlichungstag und Bekanntmachung des Hinweises auf die Patenterteilung: **09.09.2020**
(21) Anmeldenummer: 18000500.1
(22) Anmeldetag: 06.06.2018
(51) Int. Cl.: D06F 95/00, D06F 67/04, D06F 71/38

(54) **VERFAHREN UND VORRICHTUNG ZUM ZUFÜHREN VON WÄSCHESTÜCKEN ZU EINER WÄSCHEBEHANDLUNGSEINRICHTUNG, INSBESONDERE MINDESTENS EINEM BELADEFÖRDERER**
METHOD AND DEVICE FOR FEEDING LAUNDRY ITEMS INTO A LAUNDRY TREATMENT DEVICE, IN PARTICULAR AT LEAST ONE CONVEYOR
PROCÉDÉ ET DISPOSITIF D'ACHEMINEMENT DES PIÈCES DE LINGE À UN DISPOSITIF DE TRAITEMENT DU LINGE, EN PARTICULIER À AU MOINS UN TRANSPORTEUR DE CHARGEMENT

(30) Priorität: 26.06.2017 DE 102017005954
(43) Veröffentlichungstag der Anmeldung: 02.01.2019
(73) Patentinhaber: Herbert Kannegiesser GmbH, 32602 Vlotho (DE)
(72) Erfinder: Bringewatt, Wilhelm, 32457 Porta Westfalica (DE); Heinz, Engelbert, 32602 Vlotho (DE); Sielermann, Jürgen, 73540 Heubach (DE)
(74) Vertreter: Möller, Friedrich

(56) Entgegenhaltungen:
- DE-A1-102014 017 477
- JP-A- 2010 273 732

## Beschreibung

Die Erfindung betrifft ein Verfahren zum Zuführen von Wäschestücken zu mindestens einem Beladeförderer gemäß dem Oberbegriff des Anspruchs 1. Die Erfindung betrifft weiterhin eine Vorrichtung zum Zuführen von Wäschestücken zu einer Wäschebehandlungseinrichtung gemäß dem Oberbegriff des Anspruchs 7.

Wäschestücke, und zwar vor allem sogenannte Flachwäschestücke, werden einzeln einer Wäschebehandlungseinrichtung, beispielsweise einer Mangel, zur weiteren Ver- bzw. Bearbeitung zugeführt. Bevorzugt werden die Wäschestücke nicht direkt der Wäschebehandlungseinrichtung zugeführt, sondern mindestens einem Beladeförderer einer der Wäschebehandlungseinrichtung vorgeordneten Eingabemaschine.

Aus der DE 10 2014 017 477 A1 sind ein Verfahren und eine Vorrichtung zum Zuführen von Wäschestücken zu einer Eingabemaschine bekannt. Ein ausgestreckter vorderer Querrand des jeweiligen Wäschestücks wird an seinen Ecken von einzelnen Klammern gehalten und von diesen Klammern entweder an Spreizklammern der Eingabemaschine übergeben oder mit dem ausgestreckten vorderen Querrand auf einen Zuführförderer der Eingabemaschine abgelegt.

Aus der JP 2010-273732 A ist eine Vorrichtung mit zwei Handhabungseinrichtungen bekannt. Eine hintere Handhabungseinrichtung verfügt über zwei Klammern, die zu benachbarten Ecken eines vorderen Rands des Wäschestücks auseinandergefahren werden, um das Wäschestück dann mit diesem gestreckten vorderen Rand auf einem Förderer abzulegen.

Der Erfindung liegt die Aufgabe zugrunde, ein Verfahren und eine Vorrichtung zum automatisierten Zuführen von Wäschestücken zu mindestens einem Beladeförderer einer Eingabemaschine zu schaffen.
Ein Verfahren zur Lösung dieser Aufgabe weist die Maßnahmen des Anspruchs 1 auf. Demnach ist es vorgesehen, dass das jeweilige Wäschestück mittels wenigstens einer Handhabungseinrichtung an den mindestens einen Beladeförderer übergeben wird. Es kann so eine lückenlose automatisierte bzw. mechanisierte Kette geschaffen werden, die von keinen manuellen Tätigkeiten mehr unterbrochen ist, weil die wenigstens eine Handhabungseinrichtung den Transfer der einzelnen Wäschestücke zum jeweiligen Beladeförderer übernimmt.
Die Handhabungseinrichtung übergibt das jeweilige Wäschestück an den einzigen Beladeförderer oder einen ausgewählten Beladeförderer, indem das Wäschestück auf den betreffenden Beladeförderer aufgelegt wird oder an den Beladeförderer angehängt wird. Eine solche Übergabe lässt sich besonders zuverlässig automatisch mit einer Handhabungseinrichtung durchführen.
Falls mehrere, vorzugsweise nebeneinander angeordnete Beladeförderer vorgesehen sind, kann es sein, mit einer einzigen Handhabungseinrichtung aufeinanderfolgende Wäschestücke abwechselnd an andere, ausgewählte Beladeförderer zu übergeben. Im einfachsten Falle werden aufeinanderfolgende Wäschestücke von der Handhabungseinrichtung in einer festgelegten Reihenfolge an jeweils andere Beladeförderer übergeben. Die Wäschestücke werden dann regelmäßig auf die einzelnen Beladeförderer verteilt. Es sind aber auch unregelmäßige Verteilungen aufeinanderfolgender Wäschestücke auf die Beladeförderer denkbar.
Eine Weiterbildungsmöglichkeit des Verfahrens sieht es vor, einen Randabschnitt des jeweiligen Wäschestücks von einer Doppelklammer der Handhabungseinrichtung zu übernehmen. Die Doppelklammer weist zwei voneinander beabstandete Klammermäuler auf, die gegenüberliegende Enden des Randabschnitts ergreifen und danach halten. Es kann dadurch zwischen den beabstandeten Klammermäulern der Doppelklammer der gewünschte Randbereich oder Randabschnitt gehalten werden, und zwar vorzugsweise gestreckt oder zumindest nahezu gestreckt. Das vereinfacht die Übergabe des Wäschestücks mit dem zwischen den Klammermäulern der Doppelklammer gehaltenen Randabschnitt an die Handhabungseinrichtung und von derselben an den mindestens einen Beladeförderer der Eingabemaschine.

Bevorzugt wird das jeweilige Wäschestück im an zwei Ecken, insbesondere diagonal gegenüberliegenden Ecken, gehaltenen Zustand, in dem vorzugsweise das Wäschestück von den gehaltenen Ecken frei herunterhängt, von der Handhabungseinrichtung übernommen. Dadurch wird jedes Wäschestück in eine optimale Position bzw. Lage zum zuverlässigen automatischen Übernehmen von der Handhabungseinrichtung gebracht.

Weiterhin kann es vorgesehen sein, das jeweilige Wäschestück von der Handhabungseinrichtung zwischen den Ecken eines herunterhängenden Rands zu ergreifen. Das geschieht vorzugsweise derart, dass ein innenliegender Bereich des Rands, bevorzugt ein Randabschnitt des Randes, von der Handhabungseinrichtung ergriffen wird. Bei diesem Rand kann es sich um einen beliebigen Rand handeln, vorzugsweise um einen solchen Rand, dessen eine Ecke gehalten ist, wobei die benachbarte Ecke frei herunterhängt. Alternativ können beide benachbarten Ecken des ergreifenden Randabschnitts frei unter den beiden anderen gehaltenen Ecken herunterhängen. Das Ergreifen des Wäschestücks am herunterhängenden Randabschnitt ist mit der Handhabungseinrichtung besonders schnell und zuverlässig möglich. Das gilt vor allem dann, wenn ein mittiger oder mittlerer Randabschnitt des herunterhängenden Rands des jeweiligen Wäschestücks von der Handhabungseinrichtung ergriffen wird bzw. ergriffen werden soll.

Insbesondere kann es vorgesehen sein, dass der herunterhängende Rand oder die Kante des Wäschestücks mindestens größtenteils gerade verläuft. Das erleichtert es der Handhabungseinrichtung, das Wäschestück zuverlässig und gezielt an der gewünschten Stelle zu ergreifen.

Bei einer bevorzugten Ausgestaltung des Verfahrens liegt die Handhabungseinrichtung des betreffenden Wäschestücks auf einem Anfangsbereich des vorzugsweise schmalen Fördergurts des jeweiligen Beladeförderers auf. Diese Art der Übergabe eignet sich besonders für Handhabungseinrichtungen und ist auch rasch und zuverlässig durchführbar.

Eine Weiterbildungsmöglichkeit des Verfahrens sieht es vor, anhand sensorischer Daten und/oder von mindestens einer bildgebenden Einrichtung aufgenommene Signale das Ergreifen und/oder Übernehmen des jeweiligen einzelnen Wäschestücks durch die Handhabungseinrichtung zu steuern. Vor allem wird berührungslos wenigstens teilweise, vorzugsweise vollständig, diejenige sich durch Schwerkraft freihängend und/oder freiliegend im Raum ausbildende Kante oder derjenige Rand des von den gehaltenen Ecken herunterhängenden Wäschestücks hinsichtlich ihrer Position, Lage und/oder Ausrichtung ermittelt, die im Randabschnitt oder Kantenbereich von der Handhabungseinrichtung, vorzugsweise ihrer Doppelklammer, übernommen und ergriffen werden soll. Die Handhabungseinrichtung kann so zielgerichtet an den betreffenden Kantenbereich bzw. Randabschnitt heranbewegt werden und diesen zuverlässig erfassen.
Eine Vorrichtung zur Lösung der eingangs genannten Aufgabe weist die Merkmale des Anspruchs 7 auf. Diese Vorrichtung zeichnet sich dadurch aus, dass zwischen einem Vorförderer bzw. Zuförderer und dem mindestens einen Beladeförderer eine Handhabungseinrichtung angeordnet ist. Die Handhabungseinrichtung verkettet somit den Zu- oder Vorförderer mit dem jeweiligen Beladeförderer. Dadurch ist eine zuverlässige automatisierte Zufuhr der Wäschestücke zum jeweiligen Beladeförderer gewährleistet. Der mindestens eine Beladeförderer kann Bestandteil der nachfolgenden Wäschebehandlungseinrichtung oder vor derselben angeordnet sein.

Bei der Vorrichtung ist einem Ende eines Greifarms der Handhabungseinrichtung eine Doppelklammer mit zwei voneinander beabstandeten Klammermäulern zugeordnet. Mit dieser Doppelklammer kann ein Randabschnitt des jeweiligen Wäschestücks ergriffen werden, und zwar vorzugsweise so, dass der Randabschnitt zwischen den Klammermäulern der Doppelklammer gestreckt oder zumindest nahezu gestreckt gehalten wird. Das vereinfacht die Übergabe des Wäschestücks mit dem Randabschnitt an den betreffenden Beladeförderer.
Bei einer vorteilhaften Ausgestaltung der Vorrichtung ist der oder jeder Beladeförderer als ein Gurtförderer ausgebildet. Insbesondere sind alle vorzugsweise nebeneinander angeordneten Gurtförderer gleich ausgebildet. Mindestens sind die Gurtförderer aller Beladeförderer gleich breit. Von den Doppelklammern der Handhabungseinrichtung können dadurch die Wäschestücke auf unterschiedlichen Beladeförderern abgelegt werden, und zwar vorzugsweise gleichermaßen.

Eine bevorzugte Weiterbildungsmöglichkeit der Vorrichtung sieht es vor, dass der oder jeder als Gurtförderer ausgebildete Beladeförderer einen schmalen Fördergurt aufweist, dessen Obertrum einer Ablegestelle des jeweiligen Wäschestücks von der Handhabungseinrichtung zugeordnet ist. Dabei ist vorzugsweise die Breite des jeweiligen Fördergurts etwas geringer als der lichte Abstand der beiden Klammermäuler der Doppelklammer der Handhabungseinrichtung. Auf die Ablegestelle jedes Beladeförderers kann das betreffende Wäschestück von der Handhabungseinrichtung zuverlässig mit dem zwischen beiden Klammermäulern der Doppelklammer gehaltenen vorzugsweise zumindest teilweise gestreckten Randabschnitt abgelegt werden.

Der Zuförderer der Vorrichtung verfügt über wenigstens ein vorzugsweise unabhängig voneinander verfahrbares Klammerpaar zum Halten zweier Ecken eines jeweiligen Wäschestücks. Bei den Ecken handelt es sich um diagonal gegenüberliegende Ecken oder benachbarte Ecken eines Rahmens des Wäschestücks. Dadurch kann von den gehaltenen Ecken das Wäschestück frei herunterhängen, wodurch sich unter dem Zuförderer mindestens ein Rand des Wäschestücks ausbildet, der von der Handhabungseinrichtung zum leichten und zuverlässigen Ergreifen frei zugänglich ist.

Die Vorrichtung kann derart weitergebildet sein, dass dem Zuförderer mindestens eine bildgebende Einrichtung und/oder Sensoren zugeordnet sind, die mindestens denjenigen Rand des Wäschestücks, vorzugsweise hinsichtlich seiner Lage, Position und/oder Ausrichtung, berührungslos ermitteln, der von der Handhabungseinrichtung automatisch angefahren und ergriffen werden soll und von den Klammern des Zuförderers frei zugänglich herunterhängt. Die Signale bzw. Daten der Sensoren oder bildgebenden Einrichtung sind an eine Steuerung übertragbar, die die Handhabungseinrichtung so steuert, dass sie den betreffenden Rand des Wäschestücks gezielt anfahren und erfassen kann. Vorzugsweise handelt es sich dabei um einen zwischen benachbarten Ecken eines Randes liegenden Randabschnitt des Wäschestücks.

Bei der Handhabungseinrichtung handelt es sich bevorzugt um eine solche, die eine von einem Greifarm mehrachsig im Raum bewegbare Klammer oder ein ähnliches Greifmittel aufweist. Beispielsweise kann dazu die Handhabungseinrichtung als ein Roboter ausgebildet sein.

Bevorzugte Ausführungsbeispiele der Vorrichtung werden nachfolgend anhand der Zeichnungen näher erläutert. Diese zeigen:
- Fig. 1: eine perspektivische Darstellung der Vorrichtung,
- Fig. 2: Teile der Vorrichtung der Fig. 1, nämlich ein an einem Zuförderer hängendes Wäschestück, eine Handhabungseinrichtung und Beladeförderer einer Eingabemaschine,
- Fig. 3: die Handhabungseinrichtung mit einem daran hängenden Wäschestück kurz vor der Übergabe desselben an den Beladeförderer, und
- Fig. 4: eine Ansicht analog zu Fig. 3 beim von der Handhabungseinrichtung an den Beladeförderer übergebenen Wäschestück,

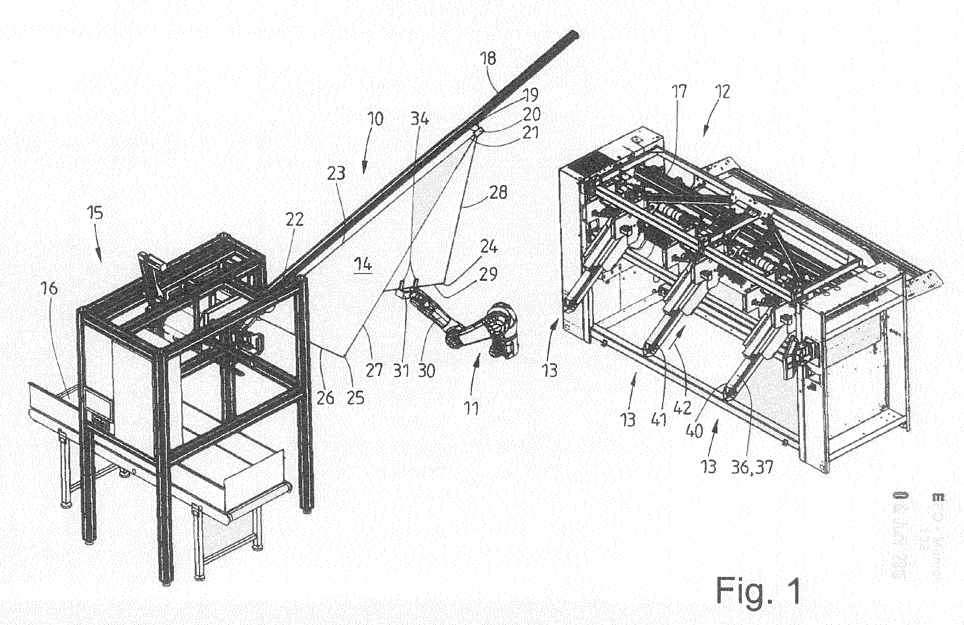

In der Fig. 1 sind ein Zuförderer 10, eine Handhabungseinrichtung 11 und eine Eingabemaschine 12 mit drei Beladeförderern 13 der Vorrichtung dargestellt. Außerdem zeigt die Fig. 1 ein am Zuförderer 10 hängendes Wäschestück 14

Die Fig. 1 zeigt des Weiteren eine Vereinzelungseinrichtung 15 vor dem Zuförderer 10. Von der Vereinzelungseinrichtung 15 ist jeweils ein einzelnes Wäschestück 14 aus einem von einem Förderer 16 an die Vereinzelungseinrichtung 15 herantransportierten, nicht gezeigten Wäschevorrat herausziehbar.

Die drei mit gleichem Abstand nebeneinander an der Vorderseite der Eingabemaschine 12 angeordneten Beladeförderer 13 sind gleich ausgebildet. Vor der Eingabemaschine 12 können alternativ auch mehr oder weniger als drei Beladeförderer 13 angeordnet sein, ggf. auch nur ein einziger Beladeförderer 13.

Vom jeweiligen Beladeförderer 13 wird ein Wäschestück 14 einer Spreizeinrichtung 17 der Eingabemaschine zugeführt, die das Wäschestück 14 quergerichtet ausbreitet. Das ausgebreitete Wäschestück 14 wird dann einem Zuförderer einer auf die Eingabemaschine 12 folgenden Wäschebehandlungseinrichtung, beispielsweise einer Mangel, zugeführt. Die Beladeförderer 13 oder der wenigstens eine Beladeförderer 13 können Bestandteil einer anderen Wäschereimaschine sein oder sich direkt vor einer solchen befinden, falls eine Eingabemaschine 13 nicht benötigt wird.

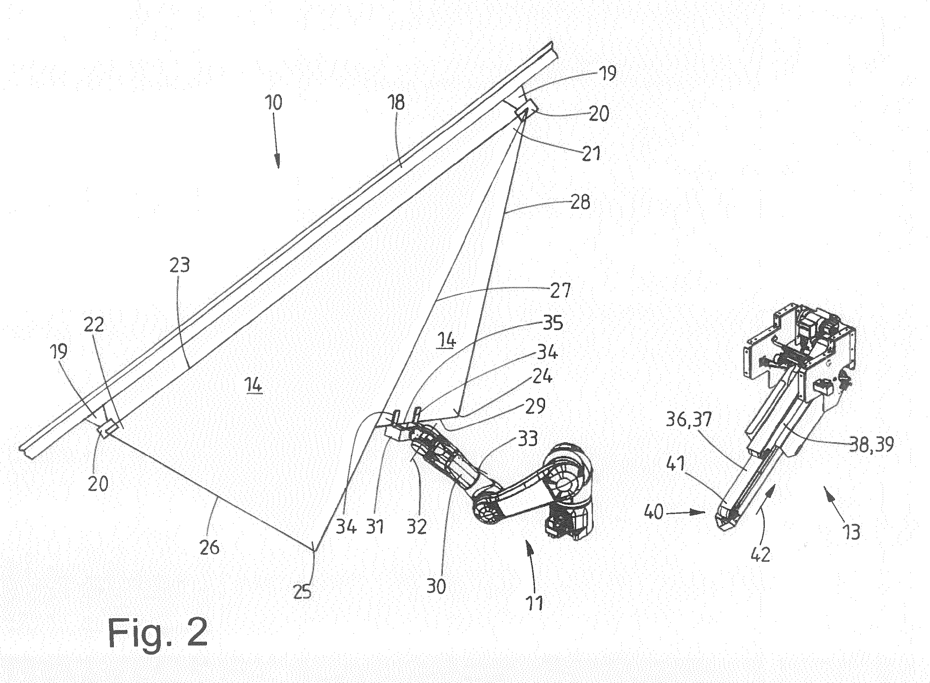

Der Zuförderer 10 verfügt über eine im gezeigten Ausführungsbeispiel geradlinige und leicht ansteigende Förderschiene 18. In oder an der Förderschiene 18 sind zwei Klammerwagen 19 mit jeweils einer unter der Förderschiene 18 sich befindenden Klammer 20 verfahrbar. Die beiden Klammern 20 der Klammerwagen 19 bilden ein Klammerpaar zum Halten zweier Ecken 21, 22 des Wäschestücks 14. Im gezeigten Ausführungsbeispiel handelt es sich um diagonal gegenüberliegende Ecken 21, 22 des Wäschestücks 14. Die Klammerwagen 19 sind durch der Förderschiene 18 zugeordnete Antriebe, beispielsweise umlaufende Förderketten, Förderriemen oder dergleichen, längs der Förderschiene 18 verfahrbar. Im gezeigten Ausführungsbeispiel sind die Klammerwagen 19 unabhängig voneinander verfahrbar. Das kann durch einen jedem Klammerwagen 19 zugeordneten eigenständigen Antrieb geschehen, aber auch durch einen Antrieb nur des voraneilenden Klammerwagens 19 mit der die Ecke 21 haltenden Klammer 20. Der nachfolgende Klammerwagen 19 wird dann vom an den beiden Ecken 21, 22 gehaltenen Wäschestück 10 hinterhergezogen. Dabei kommt es ebenso wie beim unabhängigen Antrieb beider Klammerwagen 19 zu einem Ausstrecken des Wäschestücks 14 zwischen den an den Klammern 20 gehaltenen Ecken 21, 22. Im gezeigten Ausführungsbeispiel, wo die Klammern 20 diagonal gegenüberliegende Ecken 21, 22 des Wäschestücks 14 halten, wird eine Diagonale des Wäschestücks 14 straff gezogen. Dabei hängt der restliche Teil des Wäschestücks 14 unter der Diagonalen frei herunter (Fig. 1 und 2).

Der Zuförderer 10 kann auch anders als zuvor beschrieben und in den Figuren gezeigt ausgebildet sein, insbesondere über einen anderen Verlauf verfügen. Entscheidend ist, dass der Zuförderer 10 die zuvor beschriebene Transportaufgabe erfüllt und eine idealerweise gerade Verbindungslinie zwischen den von den Klammern 20 gehaltenen Ecken 21, 22 erzeugt.

Infolge der von den Klammern 20 gehaltenen diagonal gegenüberliegenden Ecken 21 und 22 des Wäschestücks 14 bildet sich zwischen den Klammern 20 eine geradlinige, vorzugsweise gestreckte, Diagonale 23 aus. Von dieser hängen zwei jeweils ein Dreieck darstellende Hälften des Wäschestücks frei herunter, und zwar so, dass sie sich in einer vertikalen Ebene unter der Förderschiene 18 befinden. Jedes dieser beiden Dreiecke wird gebildet durch die beiden von den Klammern 20 gehaltenen Ecken 21 und 22 und jeweils eine herunterhängende freie Ecke 24 bzw. 25. Dadurch bilden sich unter der Förderschiene 18 und den daran verfahrbaren Klammern 20 vier geradlinige oder nahezu geradlinige Ränder 26 bis 29 aus. Der Rand 26 befindet sich zwischen der in einer Klammer 20 gehaltenen Ecke 22 und der freien Ecke 25. Der Rand 27 befindet sich zwischen der freien Ecke 25 und der in der anderen Klammer 20 gehaltenen Ecke 21. Zwischen dieser Ecke 21 und der weiteren freien Ecke 24 befindet sich der dritte Rand 28. Schließlich erstreckt sich der vierte Rand 29 zwischen der freien Ecke 24 und der in der nacheilenden Klammer 20 gehaltenen Ecke 22 (Fig. 1 und 2).

Bezogen auf die Zuführrichtung des Wäschestücks 14 zum betreffenden Beladeförderer 13 befindet sich zwischen dem Zuförderer 10 und dem jeweiligen Beladeförderer 13 die Handhabungseinrichtung 11. Diese ist vorzugsweise (wie in den Figuren dargestellt) als ein marktüblicher Industrieroboter ausgebildet. Die Erfindung ist aber nicht auf einen Industrieroboter beschränkt.

Die Handhabungseinrichtung 11 verfügt über eine solche Anzahl von Achsen, die es seinem ein freies Ende aufweisenden Greifarm 30 ermöglicht, das Wäschestück 14 im dreidimensionalen Raum zu bewegen sowie zu drehen und/oder zu verschwenken. Am freien Ende des Greifarms 30 der Handhabungseinrichtung 11 ist eine Klammer angeordnet, bei der es sich im gezeigten Ausführungsbeispiel um eine Doppelklammer 31 handelt. Die Doppelklammer 31 ist am Ende des Greifarms 30 umorientierbar, beispielsweise um eine quer zur Längsmittelachse des Greifarms 30 verlaufende Schwenkachse 32 schwenkbar und/oder um eine quer durch die Schwenkachse 32 verlaufende Drehachse 33 drehbar. Die Doppelklammer 31 verfügt über zwei voneinander beabstandete, vorzugsweise parallele Klammerhälften mit jeweils einem Klammermaul 34. Dadurch kann bei geschlossener Doppelklammer 31 ein Randabschnitt 35 eines beliebigen Randes 26, 27, 28 oder 29 des jeweiligen Wäschestücks 14 zwischen den beabstandeten Klammermäulern 34 gestreckt festgeklemmt und somit gehalten werden.

Die im dargestellten Ausführungsbeispiel als Industrieroboter ausgebildete Handhabungseinrichtung 11 ist um so viele Achsen verdrehbar oder verschwenkbar, einschließlich der Verdrehbarkeit und/oder Verschwenkbarkeit der Doppeklammer 31 am freien Ende des Greifarms 30, dass das Wäschestück 14 vom Zuförderer 10 in eine Übergabeposition an den dazu jeweils bereiten bzw. vorgesehenen und freien Beladeförderer 13 bringbar und an den Beladeförderer 13 übergebbar ist.

Jeder der gleich ausgebildeten Beladeförderer 13 verfügt über einen unteren, längeren umlaufend antreibbaren Fördergurt 36 und ein teilweise über einem Obertrum 37 des Fördergurts 36 angeordneten kürzeren oberen Fördergurt 38. Der obere Fördergurt 38 kann eigenständig umlaufend antreibbar sein. Es ist auch denkbar, dass der Fördergurt 38 durch Anlage seines Untertrums 39 am Obertrum 37 des Fördergurts 36 schleppend mitbewegt wird.

Ein Anfang des kürzeren oberen Fördergurts 38 ist gegenüber einem freien vorderen Ende 40 des unteren Fördergurts 36 bezogen auf die Laufrichtung seines Obertrums 37 zur Spreizeinrichtung 17 der Eingabemaschine 12, nämlich in Transportrichtung 42 des jeweiligen Beladeförderers 13, zurückversetzt. Dadurch liegt das Obertrum 37 des Fördergurts 36 am Anfang frei zur Bildung eines Auflegebereichs 41 des Wäschestücks 14. Auf diesen Auflegebereich 41 kann das betreffende Wäschestück 14 mit vornliegendem Randabschnitt 35 von der Handhabungseinrichtung 11 aufgelegt werden, so dass der Rand 29 U-förmig von der Doppelklammer 31 der Handhabungseinrichtung 11 auf den Auflegebereich 41 aufgelegt wird.

Die Beladeförderer 13 sind im gezeigten Ausführungsbeispiel gleichermaßen geneigt, und zwar so, dass das Obertrum 37 des Fördergurts 36 in Richtung zur Spreizeinrichtung 17 leicht ansteigend verläuft. Es ist auch denkbar, dass die Beladeförderer 13 horizontal oder zur Spreizeinrichtung 17 hin abwärtsgerichtet verlaufen.

Zumindest die unteren Fördergurte 36 der Beladeförderer 13 sind relativ schmal ausgebildet. Dadurch verfügt mindestens der den Auflegebereich 41 bildende Fördergurt 36 des jeweiligen Beladeförderers 13 über eine Breite, die etwas geringer ist als der lichte Abstand der beiden Klammermäuler 34 der Doppelklammer 31 der Handhabungseinrichtung 11. Es kann so beim Auflegen des Wäschestücks 14 auf den Auflegebereich 41 des Obertrums 37 des unteren Fördergurts 36 jedes Klammermaul 34 der Doppelklammer 31 an gegenüberliegenden äußeren Rändern des Fördergurts 36, insbesondere seines Obertrums 37, entlangbewegt werden, ohne dabei mit dem Obertrum 37, insbesondere seinen Längsrändern, zu kollidieren.

Nachfolgend wird das erfindungsgemäße Verfahren unter Bezugnahme auf die zuvor beschriebene Vorrichtung erläutert:
Ein einzelnes bzw. vorher von der Vereinzelungseinrichtung 15 vereinzeltes Wäschestück 14 wird vom Zuförderer 10 an die Handhabungseinrichtung 11 herangefahren. Dabei halten zwei Klammern 20 des Zuförderers 10 diagonal gegenüberliegende Ecken 21, 22 des Wäschestücks 14.

Das Wäschestück 14 wird von den Klammerwagen 19 so verfahren, dass sie die von den Klammern 20 gehaltenen Ecken 21, 22 auseinanderziehen und dadurch unter der Förderschiene 18 mit den Klammern 20 eine Diagonale 23 des Wäschestücks 14 ausgestreckt wird. Dadurch bilden sich unter den Klammern 20 und der Diagonalen 23 zwei ausgestreckt herunterhängende Dreiecke des Wäschestücks 14 mit frei von den Klammern 20 herunterhängenden Ecken 24 und 25. Aufgrund dessen bilden sich etwa geradlinige Ränder 26, 27, 28 und 29 des Wäschestücks 14 unter dem Zuförderer 10.

Die Handhabungseinrichtung 11, im gezeigten Ausführungsbeispiel ein handelsüblicher Roboter bzw. Industrieroboter, kann einen gewünschten Rand 26, 27, 28 oder 29 des unter dem Zuförderer 10 mit gestreckter Diagonale 23 frei heraushängenden Wäschestücks 14 ergreifen. Im gezeigten Ausführungsbeispiel ergreift die Doppelklammer 31 der Handhabungseinrichtung 11 einen mittigen bzw. mittennahen Randabschnitt 35 des Rands 29 des Wäschestücks 14. Genauso könnte - falls das gewünscht sein sollte - die Doppelklammer 31 einen anderen Rand 26, 27 oder 28 des Wäschestücks 14 ergreifen.

Auch könnte das Wäschestück 10 von den Klammern 20 des Zuförderers 10 an zwei benachbarten Ecken eines Rands ausgestreckt werden. Dann würde das Wäschestück 14 mit seiner viereckigen oder rechteckigen Fläche ausgebreitet unter den Klammern 20 der Förderschiene 18 des Zuförderers 10 hängen und einer der drei herunterhängenden Ränder des Wäschestücks 14 von der Doppelklammer 31 der Handhabungseinrichtung 11 ergriffen werden.

Die Handhabungseinrichtung 11, insbesondere ihre Doppelkammer 31, wird von einer Steuerung gezielt an den mittig oder mittennah zu ergreifenden Rand 29 des unter dem Zuförderer 10 hängenden Wäschestücks 14 herangefahren. Zu diesem Zweck wird mindestens der zu erfassende Rand 29 des Wäschestücks 14 von mindestens einer bildgebenden Einrichtung oder Sensoren berührungslos in seinen Abmessungen, seiner Lage, seiner Richtung und/oder Position erfasst. Bei der bildgebenden Einrichtung kann es sich beispielsweise um eine einzige dreidimensionale Kamera oder auch mehrere zweidimensionale Kameras handeln. Die von der bildgebenden Einrichtung bzw. der Sensoranordnung erzeugten Signale werden einer Steuerung zugeführt, die die Signale so verarbeitet, dass die Doppelklammer 31 an die Mitte oder einen mittennahen Bereich des Rands 29 heranfahren und danach durch Schließen der beiden Klammermäuler 34 der Doppelklammer 31 festklemmen kann. Im gezeigten Ausführungsbeispiel, wo ein unterer Rand 29 des Wäschestücks 14 zu erfassen ist, wird die Doppelklammer 31 mit nach oben weisenden Öffnungen der Klammermäuler 34 von unten an den Rand 29 herangefahren. Dabei werden die Arme der Handhabungseinrichtung 11 entsprechend verschwenkt und/oder verdreht. Vor allem wird die Doppelklammer 31 am freien Ende des Greifarms 30 so um die Drehachse 33 verschwenkt und/oder verdreht, dass der zu ergreifende Randabschnitt an der gewünschten Stelle in die offenen Klammermäuler 34 gelangen kann.

Nach dem Schließen der Klammermäuler 34 hält die Doppelklammer 31 zwischen den Klammermäulern einen Randabschnitt 35 des Randes 29 des Wäschestücks 14. Weil das Ergreifen des Randabschnitts 35 bei geradlinig unter dem Zuförderer 10 hängenden Rand 29 erfolgt, ist der Randabschnitt 35 zwischen den Klammermäulern 34 der Doppelklammer 31 geradlinig oder leicht gestreckt gehalten.

Nachdem die Handhabungseinrichtung 14 den Randabschnitt 35 des Randes 29 des Wäschestücks 14 mit der Doppelklammer 31 ergriffen und gegebenenfalls von der Handhabungseinrichtung 11 die Doppelklammer 31 etwas hochgeschwenkt ist, wird das Wäschestück 14 durch Öffnen der beiden die Ecken 21 und 22 haltenden Klammern 20 vom Zuförderer 10 gelöst. Das Wäschestück 14 hängt dann nur noch an der Doppelklammer 31 der Handhabungseinrichtung 11.

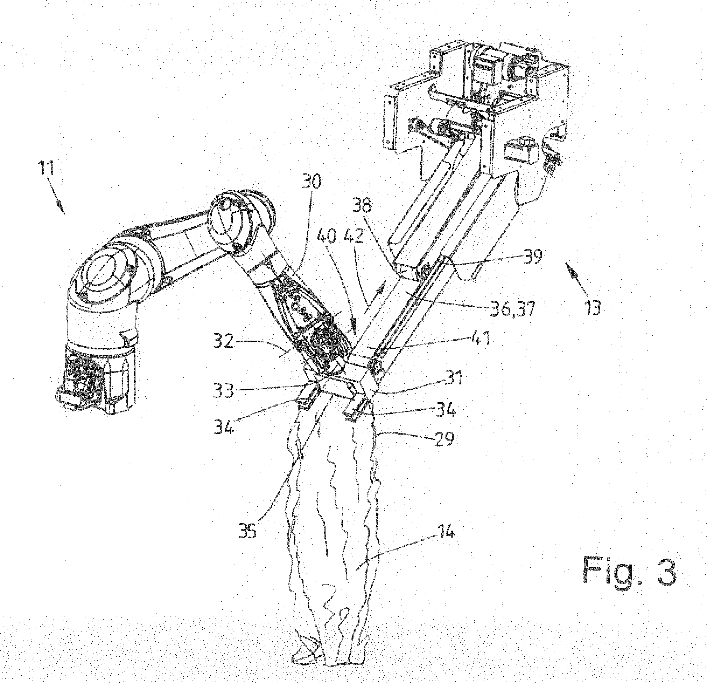

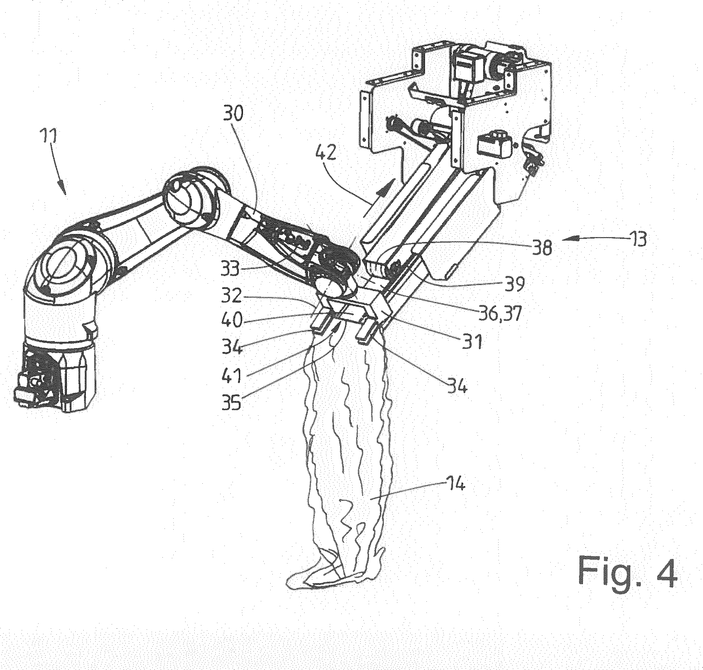

Das an der Handhabungseinrichtung 11 hängende Wäschestück 14 wird durch entsprechendes Verdrehen, Verschwenken und sonstiges vorzugsweise mehrachsiges Umpositionieren der einzelnen Arme, insbesondere des Greifarms 30, der Handhabungseinrichtung 11 zu demjenigen Beladeförderer 13 der Eingabemaschine 12 bzw. vor der Eingabemaschine 12 überführt, auf die das Wäschestück 10 aufgelegt werden soll. Dabei finden auch ein Verdrehen und ein Verschwenken der Doppelklammer 31 mit dem von dieser herunterhängenden Wäschestück 14 statt. Dieses erfolgt derart, dass die offenen Seiten der beiden Klammermäuler 34 der Doppelklammer 31 der Transportrichtung des Obertrums 37 des Fördergurts 36 in Richtung zur Spreizeinrichtung 17 gerichtet ist (Fig. 3). Außerdem werden die Klammermäuler 34 und die Doppelklammer 31 so ausgerichtet, dass sie parallel zum Obertrum 37 des Fördergurts 36 verlaufen und sich die zueinander weisenden Innenseiten der Klammermäuler 34 mit geringfügigem Abstand zum Fördergurt 36 auf gegenüberliegenden Längsseiten des Fördergurts 36, insbesondere des Obertrums 37 desselben, befinden (Fig. 4).

Nachdem in der vorstehend beschriebenen Weise von der Handhabungseinrichtung 11 die Doppelklammer 31 mit dem davon gehaltenen Wäschestück 14 vor dem mit dem Wäschestück 14 zu beschickenden Beladeförderer 13 positioniert worden ist, wird von der Handhabungseinrichtung 11 die Doppelklammer 31 mit dem daran hängenden Wäschestück 14 in Transportrichtung 42 des Obertrums 37 des Fördergurts 36 bewegt. Dabei gelangt der zwischen den Klammermäulern 34 der Doppelklammer 31 gehaltene Randabschnitt 35 mit dem daran anschließenden Abschnitt des Wäschestücks 14 zwischen den Klammermäulern 34 auf bzw. über dem Auflegebereich 41 auf das Obertrum 37 des Beladeförderers 13 (Fig. 4).

Wenn das Wäschestück 14 mit dem Randabschnitt 35 und dem nachfolgenden Bereich des Wäschestücks 14 sich auf oder über dem Auflegebereich 41 befindet, werden die Klammermäuler 34 der Doppelklammer 31 geöffnet und von der Handhabungseinrichtung 11 in die Doppelklammer 31 mit geöffneten Klammermäulern 34 so weit in Transportrichtung 42 des Fördergurts 36 des Beladeförderers 13 weiterbewegt, bis das Wäschestück 14 die Klammermäuler 34 verlassen hat. Die Übergabe des Wäschestücks 14 von der Handhabungseinrichtung 11 an den betreffenden Beladeförderer 13 ist dann abgeschlossen. Das Wäschestück 14 liegt dann in einer etwa U-förmigen Konfiguration auf dem Fördergurt 36 des Beladeförderers 13.

Vom umlaufenden Fördergurt 36 des Beladeförderers 13 werden das Wäschestück 14 mit in Transportrichtung 42 angetriebenem Obertrum 37 des Fördergurts 36 zur Spreizeinrichtung 17 transportiert. Dieser Transport geschieht nach dem Erreichen des kürzeren, zurückversetzten oberen Fördergurts 38 zwischen dem Obertrum 37 des Fördergurts 36 und dem Untertrum 39 des Fördergurts 38 hinweg.

Das Übergeben des Wäschestücks 14 von der Handhabungseinrichtung 14 an den Auflegebereich 41 des ausgewählten Beladeförderers 13 kann bei drehend angetriebenen Fördergurten 36 und/oder 38 erfolgen. Es findet dann eine quasi "fliegende" Übergabe des Wäschestücks 14 von der Doppelklammer 31 der Handhabungseinrichtung 11 an den Beladeförderer 13 statt. Es ist aber auch denkbar, die Übergabe des Wäschestücks 14 von der Handhabungseinrichtung 11 an den betreffenden Beladeförderer 13 bei momentan stillstehendem Fördergurt 36 und/oder 38 vorzunehmen. Dann steht der Auflegebereich 41 am vorderen Ende des Obertrums 37 des Fördergurts 36 während des Ablegens des Randabschnitts 35 mit dem daran angrenzenden Bereich des Wäschestücks 14 auf den Auflegebereich 41 während der Übergabe kurzzeitig still.

Es ist auch denkbar, die Klammermäuler 34 zum Lösen des Wäschestücks 14 oder der Doppelklammer 31 soweit zu öffnen, vorzugsweise die untere Hälfte jedes Klammermauls 34 um nahezu 90° herunterzuschwenken, so dass nach dem Öffnen der Klammermäuler 34 die Doppelklammer 31 bezogen auf die Fläche des Auflegebereichs 41 von der Handhabungseinrichtung 11 nur hochbewegt oder alternativ hoch und in Transportrichtung 42 vorbewegt wird. Die vorstehend beschriebenen Möglichkeiten des Wegfahrens der geöffneten Doppelklammer 31 vom auf den Auflegebereich 41 des Beladeförderers 13 abgelegten Wäschestück 14 eignen sich besonders zur "fliegenden" Übergabe des Wäschestücks 14 von der Handhabungseinrichtung 11 an den betreffenden Beladeförderer 13.

Die Erfindung ist nicht auf die zuvor beschriebene Zuführung von Wäschestücken 14 mit einer beispielsweise als Roboter ausgebildeten Handhabungseinrichtung 11 an die Eingabemaschine 12 beschränkt. Die Erfindung eignet sich vielmehr auch zur Zufuhr von Wäschestücken 14 mit einer Handhabungseinrichtung 11 zu anderen Wäschereimaschinen. Auch brauchen die Wäschestücke 14 nicht zwingend von einer Vereinzelungseinrichtung 15 vereinzelt zu sein. Die Wäschestücke 14 können auch von einem beliebig ausgestalteten Transportsystem oder einer Sortiereinrichtung stammen.

### Bezugszeichenliste:

| | | | |
|---|---|---|---|
| 10 | Zuförderer | 36 | Fördergurt |
| 11 | Handhabungseinrichtung | 37 | Obertrum |
| 12 | Eingabemaschine | 38 | Fördergurt |
| 13 | Beladeförderer | 39 | Untertrum |
| 14 | Wäschestück | 40 | Ende |
| 15 | Vereinzelungseinrichtung | 41 | Auflegebereich |
| 16 | Förderer | 42 | Transportrichtung |
| 17 | Spreizeinrichtung | | |
| 18 | Förderschiene | | |
| 19 | Klammerwagen | | |
| 20 | Klammer | | |
| 21 | Ecke | | |
| 22 | Ecke | | |
| 23 | Diagonale | | |
| 24 | freie Ecke | | |
| 25 | freie Ecke | | |
| 26 | Rand | | |
| 27 | Rand | | |
| 28 | Rand | | |
| 29 | Rand | | |
| 30 | Greifarm | | |
| 31 | Doppelklammer | | |
| 32 | Schwenkachse | | |
| 33 | Drehachse | | |
| 34 | Klammermaul | | |
| 35 | Randabschnitt | | |

## Patentansprüche

1. Verfahren zum Zuführen von Wäschestücken (14) zu mindestens einem Beladeförderer (13) einer Eingabemaschine (12) zum Eingeben von Wäschestücken (14) in eine Mangel oder dergleichen, wobei jeweils ein vereinzeltes Wäschestück (14) an den wenigstens einen Beladeförderer (13) übergeben wird, **dadurch gekennzeichnet, dass** das jeweilige Wäschestück (14) von einer Handhabungseinrichtung (11) an den jeweiligen Beladeförderer (13) übergeben wird, wobei das jeweilige Wäschestück (14) von einer zwei beabstandete Klammermäuler (34) aufweisenden Doppelklammer (31) der Handhabungseinrichtung (11) an einem mittigen oder mittennahen Randabschnitt (35) eines zu ergreifenden Rands (29) des Wäschestücks (14) zwischen benachbarten Ecken (21, 22, 24, 25) eines herunterhängenden Randes (26, 27 ,28, 29) ergriffen wird, die Handhabungseinrichtung (11) das jeweilige Wäschestück (14) auf den oder den vorgesehenen Beladeförderer (13) auflegt oder an den Beladeförderer (13) anhängt und die Handhabungseinrichtung (11) das betreffende Wäschestück (14) mit dem Randabschnitt (35) derart auf einen Anfangsbereich oder Auflegebereich (41) eines eine geringere Breite als der lichte Abstand der Klammermäuler (34) der Doppelklammer (31) aufweisenden Fördergurts (36) des jeweiligen Beladeförderers (13) auflegt bzw. ablegt, dass danach das Wäschestück (14) in einer etwa U-förmigen Konfiguration auf oder über einem Fördergurt (36) des Beladeförderers (13) liegt.

2. Verfahren nach Anspruch 1, **dadurch gekennzeichnet, dass** das jeweilige Wäschestück (14) in einem an zwei Ecken (21, 22), vorzugsweise diagonal gegenüberliegenden Ecken (21, 22), von einem Zuförderer (10) gehaltenen Zustand, insbesondere im von den beiden von Klammern (20) des Zuförderers (10) gehaltenen Ecken (21, 22) frei herunterhängenden Zustand, von der Handhabungseinrichtung (11) übernommen wird.

3. Verfahren nach Anspruch, **dadurch gekennzeichnet, dass** der Randabschnitt (35) von der Doppelklammer (31) der Handhabungseinrichtung (11) übernommen wird, die zwei beabstandete Klammermäuler (34) aufweist, die gegenüberliegenden Enden des Randabschnitts (35) zugeordnet werden und/oder diesen halten.

4. Verfahren nach einem der vorhergehenden Ansprüche, **dadurch gekennzeichnet, dass** die Handhabungseinrichtung (11) das jeweilige Wäschestück (14) wahlweise an oder auf einen von mehreren benachbarten Beladefördern (13) aufliegt oder anhängt.

5. Verfahren nach Anspruch 3, **dadurch gekennzeichnet, dass** die Handhabungseinrichtung (11), insbesondere das Ergreifen des Randabschnitts (35) und/oder die Übergabe des jeweiligen Wäschestücks (14) mit dem Randabschnitt (35) an den dazu vorgesehenen Beladeförderer (13), anhand sensorischer Daten und/oder von mindestens einer bildgebenden Einrichtung aufgenommene Bilddaten gesteuert wird.

6. Verfahren nach Anspruch 5, **dadurch gekennzeichnet, dass** von der mindestens einen bildgebenden Einrichtung wenigstens ein Teil des von einem Zuförderer (10) frei herunterhängenden, vorzugsweise mindestens zum Großteil geraden oder gerade aushängenden, Rands (26, 27, 28, 29) aufgenommen wird und anhand dabei erhaltener Daten, insbesondere Bilddaten, die Handhabungseinrichtung gesteuert wird.

7. Vorrichtung zum Zuführen von Wäschestücken (14) zu einer Mangel oder dergleichen, mit einem Zuförderer (10) und einer mindestens einen Beladeförderer (13) aufweisenden Eingabemaschine (12), **dadurch gekennzeichnet, dass** zwischen dem Zuförderer (10) und dem mindestens einen Beladeförderer (13) eine Handhabungseinrichtung (11) angeordnet ist, dass einem Ende eines Greifarms (30) der Handhabungseinrichtung (11) eine Doppelklammer (31) mit zwei voneinander beabstandeten Klammermäulern (34) zum Halten eines mittigen oder mittennahen Randabschnitts (35) eines Rands (29) des Wäschestücks (14) zugeordnet ist, dass der mindestens eine Beladeförderer (13) als ein Gurtförderer ausgebildet ist und dass der oder jeder als Gurtförderer ausgebildete Beladeförderer (13) wenigstens einen schmalen Fördergurt (36, 38) aufweist, dessen Breite etwas geringer ist als der lichte Abstand der beiden Klammermäuler (34) der Doppelklammer (31) der Handhabungseinrichtung (11), so dass jedes Klammermaul (34) der Doppelklammer (31) an gegenüberliegenden Seiten von äußeren Rändern des Fördergurtes (36, 38) entlang bewegbar ist.

8. Vorrichtung nach Anspruch 7, **dadurch gekennzeichnet, dass** der Zuförderer (10) wenigstens zwei vorzugsweise unabhängig voneinander verfahrbare Klammern (20) aufweist zum Halten und/oder Ausstrecken zweier Ecken (21, 22), insbesondere diagonal gegenüberliegender Ecken (21, 22) eines jeweiligen Wäschestücks (14).

9. Vorrichtung nach Anspruch 7 oder 8, **dadurch gekennzeichnet, dass** dem Zuförderer (10) mindestens eine bildgebende Einrichtung und/oder Sensoren zugeordnet sind, die mindestens denjenigen Rand (26, 27, 28, 29) des jeweiligen Wäschestücks (14) vorzugsweise hinsichtlich seiner Position, Länge, Lage und/oder Ausrichtung berührungslos ermitteln, der von der Handhabungseinrichtung (11) zu ergreifen und zu übernehmen ist.

10. Vorrichtung nach einem der Ansprüche 7 bis 9, **dadurch gekennzeichnet, dass** mehrere vorzugsweise mit Abstand nebeneinander angeordnete Beladeförderer (13) vorgesehen sind, die alle gleichermaßen als Gurtförderer ausgebildet sind.

11. Vorrichtung nach einem der Ansprüche 7 bis 10, **dadurch gekennzeichnet, dass** ein Obertrum (37) eines unteren Fördergurts (36) oder des einzigen Fördergurts einen Auflegebereich (41) für einen Teil des jeweiligen Wäschestücks (14) aufweist.

12. Vorrichtung nach Anspruch 7, **dadurch gekennzeichnet, dass** der Greifarm (30) der Handhabungseinrichtung (11) mehrachsig bewegbar ist und/oder die Doppelklammer (31) mehrachsig verfahrbar ist.

## Claims

1. A method for feeding items of laundry (14) to at least one loading conveyor (13) of a feeding machine (12) for feeding items of laundry (14) to a mangle or the like, wherein a respective separated item of laundry (14) is transferred to the at least one loading conveyor (13), **characterized in that** the respective item of laundry (14) is transferred to the respective loading conveyor (13) by a handling device (11), wherein the respective item of laundry (14) is gripped by a double clip (31) of the handling device (11) having two spaced-apart clip mouths (34) at a central or near-central portion (35) of a periphery (29) of the item of laundry (14) to be gripped between adjacent corners (21, 22, 24, 25) of a hanging-down periphery (26, 27, 28, 29), the handling device (11) positions the respective item of laundry (14) on the loading conveyor or conveyors (13) provided or hangs it on the loading conveyor (13) and the handling device (11) positions or places the item of laundry (14) concerned with the portion (35) on an initial region or supporting region (41) of a conveyor belt (36) of the respective loading conveyor (13) having a smaller width than the clear distance between the clip mouths (34) of the double clips (31) in such a manner that the item of laundry (14) then lies in an approximately U-shaped configuration on or above a conveyor belt (36) of the loading conveyor (13).

2. The method as claimed in claim 1, **characterized in that** the handling device (11) receives the respective item of laundry (14) in a state in which it is held at two corners (21, 22), preferably diagonally opposite corners (21, 22), by a feed conveyor (10), in particular in a state in which it hangs down freely from the two corners (21, 22) held by clips (20) of the feed conveyor (10).

3. The method as claimed in claim 2, **characterized in that** the peripheral portion (35) is received by the double clip (31) of the handling device (11) which has two spaced-apart clip mouths (34) which are assigned to and/or hold opposite ends of the peripheral portion (35).

4. The method as claimed in one of the preceding claims, **characterized in that** the handling device optionally positions or hangs the respective item of laundry (14) on or onto one of several adjacent loading conveyors (13).

5. The method as claimed in claim 3, **characterized in that** the handling device (11), in particular the gripping of the peripheral portion (35) and/or the transfer of the respective item of laundry (14) with the peripheral portion (35) to the loading conveyor (13) provided for this purpose, is controlled on the basis of sensory data and/or image data recorded by means of at least one imaging device.

6. The method as claimed in claim 5, **characterized in that** at least part of the periphery (26, 27, 28, 29), preferably at least for the most part straight or straight-hanging, freely hanging from a feed conveyor (10), is recorded by the at least one imaging device, and the handling device is controlled on the basis of data obtained in the process, in particular image data.

7. An apparatus for feeding items of laundry (14) to a mangle or the like, having a supply conveyor (10) and a feeding machine (12), which has at least one loading conveyor (13), **characterized in that** a handling device (11) is arranged between the supply conveyor (10) and the at least one loading conveyor (13), that one end of a gripping arm (30) of the handling device (11) is assigned a double clip (31) having two spaced-apart mouths (34) for holding a central or near-central peripheral portion (35) of a periphery (29) of the item of laundry (14), that the at least one loading conveyor (13) is designed in the form of a belt conveyor, and that the or each loading conveyor (13), which is designed in the form of a belt conveyor, has at least one narrow conveyor belt (36, 38), of which the width is somewhat smaller than the clear distance between the two mouths (34) of the double clip (31) of the handling device (11), so that each mouth (34) of the double clip (31) can be moved along opposite sides of outer peripheries of the conveyor belt (36, 38).

8. The apparatus as claimed in claim 7, **characterized in that** the supply conveyor (10) has at least two clips (20), that are preferably displaceable independently of one another, for retaining and/or stretching out two corners (21, 22), in particular diagonally opposite corners (21, 22), of a respective item of laundry (14)

9. The apparatus as claimed in claim 7 or 8, **characterized in that** the supply conveyor (10) is assigned at least one imaging device and/or sensors, which detect in a contactless manner at least that periphery (26, 27, 28, 29) of the respective item of laundry (14), preferably with respect to its position, length, location and/or orientation, which is to be gripped and to be received by the handling device (11)

10. The apparatus as claimed in one of the claims 7 to 9, **characterized in that** a plurality of loading conveyors (13) preferably spaced apart one beside the other are provided which are all designed in the same way as in the form of conveyor belts.

11. The apparatus as claimed in one of the claims 7 to 10, **characterized in that** an upper strand (37) of a lower conveyor belt (36), or of the single conveyor belt, has a supporting region (41) for part of the respective item of laundry (14).

12. The apparatus as claimed in claim 7, **characterized in that** the gripping arm (30) of the handling device (11) can be moved multiaxially in space and/or that the double clip (31) can travel multiaxially in space.

## Revendications

1. Procédé permettant d'acheminer des pièces de linge (14) jusqu'à au moins un convoyeur de chargement (13) d'une machine d'introduction (12) destinée à introduire des pièces de linge (14) dans une calandre ou similaire, respectivement une pièce de linge séparée (14) étant transférée audit au moins un convoyeur de chargement (13), **caractérisé en ce que** la pièce de linge (14) respective est transférée d'un dispositif de manutention (11) au convoyeur de chargement (13) respectif, dans lequel la pièce de linge (14) respective est saisie par une pince double (31) du dispositif de manutention (11), présentant deux mâchoires de pince (34) espacées, au niveau d'une partie de bord (35) centrale ou proche du centre d'un bord (29) à saisir de la pièce de linge (14) entre des coins voisins (21, 22, 24, 25) d'un bord suspendu (26, 27, 28, 29), le dispositif de manutention (11) pose la pièce de linge (14) respective sur le convoyeur de chargement (13) ou le convoyeur prévu ou l'accroche au convoyeur de chargement (13), et le dispositif de manutention (11) pose ou dépose la pièce de linge (14) en question par la partie de bord (35) sur une zone initiale ou zone de pose (41) d'une courroie de convoyeur (36), de largeur inférieure à l'espace libre des mâchoires de pince (34) de la double pince (31), du convoyeur de chargement (13) respectif, de telle sorte qu'ensuite la pièce de linge (14) se trouve dans une configuration approximativement en forme de U sur ou en travers d'une courroie de convoyeur (36) du convoyeur de chargement (13).

2. Procédé selon la revendication 1, **caractérisé en ce que** la pièce de linge (14) respective est réceptionnée par le dispositif de manutention (11) dans un état où elle est maintenue par un convoyeur d'alimentation (10) par deux coins (21, 22), de préférence des coins (21, 22) diamétralement opposés, en particulier à l'état où elle est suspendue librement des deux coins (21, 22) maintenus par les pinces (20) du convoyeur d'alimentation (10).

3. Procédé selon la revendication 2, **caractérisé en ce que** la partie de bord (35) est réceptionnée par la pince double (31) du dispositif de manutention (11) qui présente deux mâchoires de pince (34) espacées qui sont associées à des extrémités opposées de la partie de bord (35) et/ou la maintiennent.

4. Procédé selon l'une quelconque des revendications précédentes, **caractérisé en ce que** le dispositif de manutention (11) pose ou accroche la pièce de linge (14) respective sélectivement sur l'un de plusieurs convoyeurs de chargement (13) voisins.

5. Procédé selon la revendication 3, **caractérisé en ce que** le dispositif de manutention (11), en particulier le fait de saisir la partie de bord (35) et/ou le transfert de la pièce de linge (14) respective par la partie de bord (35) au convoyeur de chargement (13) prévu à cet effet, est commandé à l'aide de données de capteur et/ou de données d'image enregistrées par au moins un dispositif de formation d'image.

6. Procédé selon la revendication 5, **caractérisé en ce que** ledit au moins un dispositif de formation d'image enregistre au moins une partie d'un bord (26, 27, 28, 29) suspendu librement d'un convoyeur d'alimentation (10) et de préférence droit ou au moins largement droit, et le dispositif de manutention est commandé à l'aide de données ainsi obtenues, en particulier de données d'image.

7. Dispositif permettant d'acheminer des pièces de linge (14) jusqu'à une calandre ou similaires, comprenant un convoyeur d'alimentation (10) et une machine d'introduction (12) présentant au moins un convoyeur de chargement (13), **caractérisé en ce qu'**un dispositif de manutention (11) est disposé entre le convoyeur d'alimentation (10) et ledit au moins un convoyeur de chargement (13), **en ce qu'**à une extrémité d'un bras de préhension (30) du dispositif de manutention (11) est associée une pince double (31) munie de deux mâchoires de pince (34), espacées l'une de l'autre, pour maintenir une partie de bord (35) centrale ou proche du centre d'un bord (29) de la pièce de linge (14), **en ce que** ledit au moins un convoyeur de chargement (13) est réalisé comme un convoyeur à courroie, et **en ce que** le ou chaque convoyeur de chargement (13) réalisé comme un convoyeur à courroie présente au moins une courroie de transport (36, 38) étroite dont la largeur est légèrement inférieure à l'espacement libre des deux mâchoires de pince (34) de la pince double (31) du dispositif de manutention (11), de sorte que chaque mâchoire de pince (34) de la pince double (31) est mobile le long des côtés opposés des bords extérieurs de la courroie de transport (36, 38).

8. Dispositif selon la revendication 7, **caractérisé en ce que** le convoyeur d'alimentation (10) présente au moins deux pinces (20), pouvant de préférence être déplacées indépendamment l'une de l'autre, pour maintenir et/ou étendre deux coins (21, 22), en particulier des coins (21, 22) diamétralement opposés, d'une pièce de linge (14) respective.

9. Dispositif selon la revendication 7 ou 8, **caractérisé en ce qu'**un dispositif de formation d'image et/ou des capteurs sont associés au convoyeur d'alimentation (10) qui déterminent sans contact au moins le bord (26, 27, 28, 29) de la pièce de linge (14), respective de préférence concernant sa position, sa longueur, sa situation et/ou son alignement, qui doit être saisi ou réceptionné par le dispositif de manutention (11).

10. Dispositif selon l'une quelconque des revendications 7 à 9, **caractérisé en ce que** plusieurs convoyeurs de chargement (13), de préférence disposés de manière espacée les uns à côté des autres, sont prévus qui sont tous également réalisés comme des convoyeurs à courroie.

11. Dispositif selon l'une quelconque des revendications 7 à 10, **caractérisé en ce qu'**un brin supérieur (37) d'une courroie de convoyeur inférieure (36) ou de la seule courroie de convoyeur présente une zone de pose (41) pour une partie de la pièce de linge (14) respective.

12. Dispositif selon la revendication 7, **caractérisé en ce que** le bras de préhension (30) du dispositif de manutention (11) est mobile sur plusieurs axes et/ou la pince double (31) peut être déplacée sur plusieurs axes.
